# EUROPEAN PATENT APPLICATION

(11) **EP 1 280 255 A1**
(43) Date of publication of application: **29.01.2003**
(21) Application number: 02013244.5
(22) Date of filing: 17.06.2002
(51) Int. Cl.: H02K 7/10, B60K 1/00, B62B 5/00

(54) **Auxiliary Drive for Wheel Supported Units, such as Prams and Small Flatbed Trucks**

(30) Priority: 16.06.2001 DK 200100941
(71) Applicant: U-B-Let A/S, DK-7100 Vejle (DK)
(72) Inventor: Raun, Knud, DK-7100 Vejle (DK)
(74) Representative: Nielsen, Leif L.

(57) **Abstract**

An auxiliary drive particularly, though not necessarily, for retrofitting on already existing vehicles, such as prams, including an electric motor (20) with associated battery (9) with drive connection to carrying axle section (15) of at least one pair of wheels (5), where motor (20) and battery casing (9) with associated control equipment (12) are made attachable to the undercarriage (1) of the vehicle is disclosed, where the auxiliary drive includes an auxiliary frame (13) constituting an entire undercarriage structure (1) with underlying battery casing (9) with associated control equipment (12) and with motor (20) with associated drive connection to an axle section (15) carrying a pair of wheels (5), and where the auxiliary frame (13) with respect to engagement with engagement means (3) upwards is adapted for with unchanged engaging condition to serve as undercarriage and/or as undercarriage with supporting undercarriage frame for an upper carriage to be connected thereto.

## Description

The present invention concerns an auxiliary drive for vehicles, such as prams, based on the use of an electric motor with associated battery. Such auxiliary drives have previously been proposed, see e.g. DE U 296 14 344, DK U 1998 00432 and DK PA 1999 00065, which have the common feature that motor and battery case with associated control equipment are designed with the intention of attachment to the undercarriage of the pram.

However, by the invention it is proposed to introduce a new standard for "auxiliary drives", namely in that the drive structure is integrated with an entire undercarriage structure, so that an optimised undercarriage for retrofitting on already existing vehicles is provided with unchanged engagement conditions between upper carriage and the undercarriage, including with respect to the support springs which are normally inserted between these sections.

Prior art systems for retrofitting on existing undercarriages all suffer from the drawback that the undercarriage is not prepared in advance for this mounting, why the auxiliary drive often takes up the space which otherwise should have been used for a basket for storing diverse items, such as baby changing bag, shopping and the like often carried when the pram is used. Furthermore, the wheel structure itself and in certain cases also the undercarriage structure are of such nature that they can rarely withstand the load they are subjected to by the auxiliary drive during operation. Hereby, the pram is worn down, particularly the undercarriage and wheels of the prams, far more quickly than previously was the case.

In other cases, there are known auxiliary drives where a part of the auxiliary drive, e.g. the battery, is mounted directly under the seat or the pram bottom. This implies the drawback that the vehicle is provided a relatively high centre of gravity, which can make the vehicle unstable when used on inclining surfaces. With a construction according to the present invention it is ensured that the centre of gravity is kept very low, as the auxiliary drive unit is designed to lie below the axle level of the drive wheels, whereby it is provided that the centre of gravity is kept very low but also that the space for storing various items described above is kept as large as possible.

By recognising and making the auxiliary drive as a whole undercarriage structure, it is possible to achieve significant constructional advantages, primarily by introducing an actual support frame for the motor installation. In connection with "auxiliary drive" one has hitherto relied on utilising existing undercarriages as mounting base, and this has constituted a safety risk in cases of driving with a heavily loaded vehicle on a hilly and soft ground. The total auxiliary drive frame may include both necessary support parts and the whole wheel carrying/drive system, whereby the whole construction can be optimised on the basis of all relevant functional conditions.

Vehicle manufacturers desiring to use a such "expanded auxiliary drive" may still furnish the vehicles with their own undercarriages, as the upright parts for resilient support of the upper carriage may just be fastened to the auxiliary drive frame.

By the construction according to the invention there will be full freedom in choosing a low location of heavy parts, i.e. primarily the motor and the battery, which will contribute to ensuring good driving stability when the vehicle is loaded in the relatively highly located chassis. Besides, the auxiliary frame may by itself be made in a simple way with a top plate or basket for storing loose items, also at a low position.

By separate building up of the auxiliary or drive frame there may be operated with a further degree of freedom, namely with regard to the choice of wheel sizes and wheel types in connection with carrying and mounting parts adapted thereto. Hereby, it has been found attractive to use common large vehicle wheels as front wheels driven by a common drive shaft from a single drive motor (preferably 24V) with electronically controlled disconnection of the motor when the driving torque on the wheels is sufficient at the outset. On the same background, it will be attractive to make use of a swivelling set of steering wheels, or individually pivoting, respectively, smaller wheels of the swivel type, which, used as rear wheels, can appreciably facilitate the manoeuvrability of the vehicle.

The shown two upright support brackets for connecting to an overlying frame or chassis part does not necessarily constitute a part of the production unit which otherwise is constituted by the shown drive frame unit, as these bracket can appear as individually shaped (and coloured) connecting parts for a corresponding overlying vehicle structure. The drive frame is made with suitable fastening means just for such connecting means. As rear wheels there are used lesser wheels of the swivel type, and the wheel distance in the lateral direction of the vehicle is variable for adjusting to different vehicle widths.

It is to be noted that the invention of course will also comprise an entire vehicle, which initially has been built up with a driving wheeled frame as described her, as well as built-up vehicles and frames.

The invention is not limited to prams only, as it may be just as relevant for diverse flatbed trucks and other units with wheel support The driving frame may be provided in some basic embodiments which then, with no or little adaptation can be adapted for various applications.

The invention will now be explained with reference to the accompanying drawing where:
- Fig. 1: illustrates a perspective of the invention
- Fig. 2: shows a detail of the control unit,
- Fig. 3: shows a detail of the control unit, and
- Fig. 4: shows a details of the charging unit.

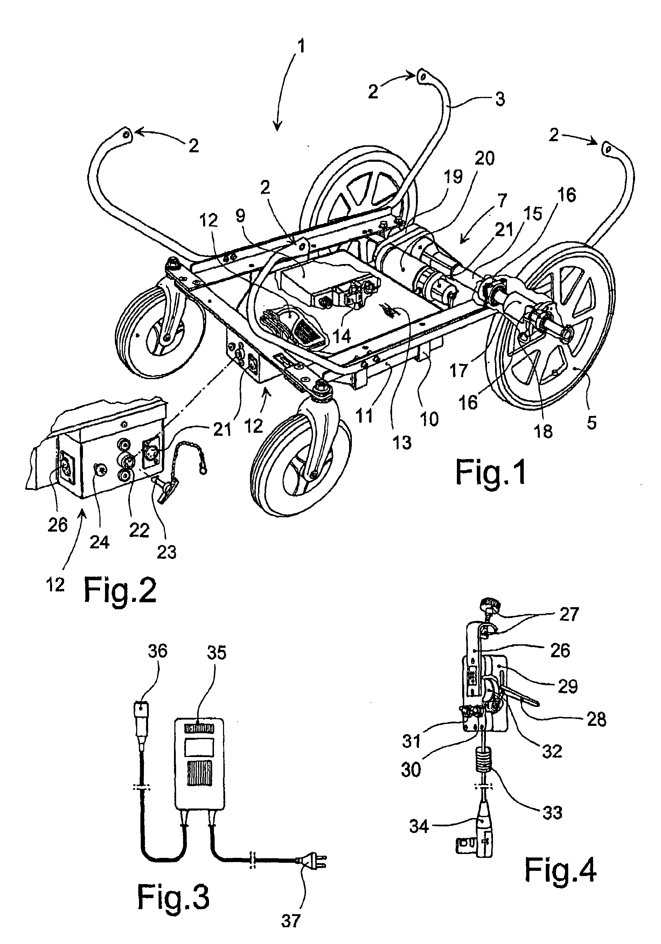

In Fig. 1 is shown an undercarriage 1 according to the invention. The undercarriage in Fig. 1 is shown as suited for being fitted with an upper part of a pram by fastening in the four eyelets 2 in a traditional way, but possibly via a spring device.

Besides, the undercarriage consists of the upright tubes 3 having the purpose of bringing the upper part of the pram up to a level where person pushing the vehicle can get in contact with the child in the pram. The upright elements 3 are connected to a bottom frame 4. On the bottom frame, four wheels are mounted. In the present example, a set of wheels 5 is depicted larger than an other set of wheels 6, just as the wheels with the drive 7 is mounted on non-swivelling wheels where the lesser wheels 6 are mounted as swivel wheels 8. These swivel wheels facilitate the manoeuvring of the vehicle as the wheels, as it is common, can rotate about their own axis.

The auxiliary drive according to the invention mainly consists of five components. The first component is the wheel arrangement itself with base frame and upright support brackets as described above. A second component is the drive itself with associated electric motor and gear as indicated with 7. To this comes a control box as shown in Fig. 2 and a battery unit 9 and a control unit as shown in Fig. 3. On the bottom frame itself, e.g. suspended in brackets 10, there is arranged a cabinet 11 in which a battery 9 and the control unit 12 may be arranged. By attaching the cabinet 11 with the brackets 10 it is very easy and unencumbered to get access to the battery and/or the control unit. Furthermore, the lowered brackets 10 provides for the heavy part of the drive, namely the battery unit 9, being disposed low, which is beneficial to stability, as the total centre of gravity for the whole construction is hereby lowered.

For the sake of the clarity, the top plate 13 of the cabinet 11 is sectioned so that the battery 9, the electronic unit and the current rectifier 14 together with a part of the control unit 12 are shown.

The drive itself consists of an axle 15 being suspended, in the example shown with ball bearings 16, at both sides of the vehicle so that it is ensured that the axle and thereby the entire auxiliary drive is provided a long service life. Besides, a snap lock 17 may be provided in connection with a wheel lock 18. Hereby it is ensured that the wheel is not dismounted by mistake. The motor and the gearbox 7 is built up of a gearbox 19 which is connected to a motor 20 and a motor brake 21. The motor is an electric motor that is provided its energy from the battery 9. Between the battery 9 and the motor 20 there may be provided a safety device, so that the motor, which is typically the most expensive part, is protected against overload.

With reference to Fig. 2, in the control box 12 is seen a main switch 22 with associated key 23, whereby the auxiliary drive can be activated by switching on the current in the system. Furthermore, there is arranged a light diode 24 which by different colour combinations may indicate the voltage in batteries, whether it is necessary to charge the battery, or whether other failures are present in the system. To this is added that a charging point 25 at which a charger, as illustrated in Fig. 4, may be connected to the unit. Furthermore, there is arranged a point for the control unit as illustrated in Fig. 3, so that control pulses from the control unit can be transmitted to the control unit for controlling the motor 20.

The control unit is typically provided as a loose unit, which can be mounted in a place comfortable for the user, so that controlling the motor can be executed from the operating/pushing handle on e.g. the upper part of the pram. For attachment on the upper part of the pram there is provided a bracket 26 and fastening means 27 whereby the control unit can be clamped around the bracket. A speeder 28 is provided on the control unit with which the user in a way similar to a car can manipulate the speeder so that the unit and thereby the wheels run faster or slower. The speeder is fitted in a speeder box 29. On the speeder box there is also installed two switches 30, 31. The switch 30 can be used for choosing low speed or high speed so that the sensitivity of the speeder 28 is further extended. The other switch 31 is used for selecting forward or back. By manipulating the speeder 28, a potentiometer 32 provided inside the box 29 is actuated, so that the correct control current is transmitted to the control unit which then, via its control means, regulates the voltage on the motor 20.

The control unit is connected via a flexible wire 33 with a plug 34 fitting into the plug outlet 26 on the control unit 12.

In order to use the auxiliary drive according to the invention, an upper part is to be mounted on the undercarriage 1. Then the main switch is activated by means of the key 23 so that the system is switched on. The control unit is to be mounted/brought in connection with the control unit and is mounted in place comfortable for the user. Then driving forward and back, respectively, of the undercarriage 1 occurs by manipulating the switches 30,31 for selecting direction and speed, and then by actuating the speeder arm 28 in order to attain the desired speed.

In Fig. 4 there is illustrated a charger 35 that may be used for charging the battery 9 in the undercarriage. The charger is connected via the plug 36 to the charging point 25 arrange on the control unit. Then the charger is connected to the mains via plug 37.

## Claims

1. An auxiliary drive particularly, though not necessarily, for retrofitting on already existing vehicles, such as prams, including an electric motor with associated battery with drive connection to carrying axle section of at least one pair of wheels, where motor and battery casing with associated control equipment are made attachable to the undercarriage of the vehicle, **characterised in that** the auxiliary drive includes an auxiliary frame constituting an entire undercarriage structure with underlying battery casing with associated control equipment and with motor with associated drive connection to an axle section carrying a pair of wheels, and where the auxiliary frame with respect to engagement with engagement means upwards is adapted for with unchanged engaging condition to serve as undercarriage and/or as undercarriage with supporting undercarriage frame for an upper carriage to be connected thereto.

2. An auxiliary drive according to claim 1, **characterised in that** the engagement means between upper carriage and undercarriage are constituted by existing supporting springs belonging to either upper carriage or undercarriage.

3. An auxiliary drive according to claim 1 or 2, **characterised in that** the undercarriage carries a platform such as a top plate or basket at the top.

4. An auxiliary drive according to any of claims 1 - 3, **characterised in that** the pair of wheels is constituted by usual large vehicle wheels carried by a common carrying axle section.

5. An auxiliary drive according to any of claims 1 - 4, **characterised in that** the undercarriage includes at least one carrying wheel of the swivel type.

6. An auxiliary drive according to any of claims 1 - 5, **characterised in that** the upper carriage is constituted by a pram case or platform with associated steering bracket and/or manoeuvring means for taking care of the driving and the transported matter, respectively.

7. An auxiliary drive according to any of claims 1 - 6, **characterised in that** the engagement means between undercarriage and upper carriage are fastened or are attachable to substantially vertically oriented cam, flange or rail members along the sides of the undercarriage.

8. An auxiliary drive according to any of claims 1 - 7, **characterised in that** the undercarriage includes a frame consisting of flat bars oriented horizontally and mainly in frame shape.

9. An auxiliary drive according to any of claims 1 - 8, **characterised in that** the battery case, preferably including the control equipment, is carried by a basket-like carrier means consisting of at least one flat bar or iron section fastened under the undercarriage.

10. An auxiliary drive according to any preceding claim, **characterised in that** the centre of gravity of the undercarriage lies at or below the axle level of the drive wheels.
